# EUROPEAN PATENT APPLICATION

(11) **EP 3 336 668 A1**
(43) Date of publication of application: **20.06.2018**
(21) Application number: 16777887.7
(22) Date of filing: 18.01.2016
(51) Int. Cl.: G06F 3/044

(54) **TOUCH CONTROL SUBSTRATE, MANUFACTURING METHOD THEREOF, DRIVE METHOD AND TOUCH DISPLAY DEVICE**

(30) Priority: 14.08.2015 CN 201510502973
(71) Applicant: BOE Technology Group Co., Ltd., Beijing 100015 (CN); Beijing BOE Optoelectronics Technology Co., Ltd., Beijing 100176 (CN)
(72) Inventor: DING, Xiaoliang, Beijing 100176 (CN); DONG, Xue, Beijing 100176 (CN); WANG, Haisheng, Beijing 100176 (CN); CHEN, Xiaochuan, Beijing 100176 (CN); LI, Fuqiang, Beijing 100176 (CN); FAN, Jun, Beijing 100176 (CN); BAO, Zhiying, Beijing 100176 (CN); LIU, Yingming, Beijing 100176 (CN); REN, Tao, Beijing 100176 (CN)
(74) Representative: Potter Clarkson LLP
(86) International application number: PCT/CN2016/071196
(87) International publication number: WO 2017/028492

(57) **Abstract**

A touch substrate, a method of manufacturing the touch substrate, a method of driving the touch substrate and a touch display device are disclosed by embodiments of the present application. The touch substrate includes: a base substrate; a plurality of touch electrodes having a same shape and a same size and provided on the base substrate; a plurality of touch leading wires provided on the base substrate, each touch electrode being electrically connected to one of the plurality of touch leading wires; shielding portions provided on the base substrate, the shielding portions being provided on a blank portion of a wiring region for the plurality of touch leading wires except an area of the wiring region in which the plurality of touch leading wires are arranged.

## Description

### CROSS-REFERENCE TO RELATED APPLICATION

This application claims the benefit of Chinese Patent Application No. 201510502973.X filed on August 14, 2015 and titled as "TOUCH SUBSTRATE AND METHOD OF MANUFACTURING THE SAME, AND TOUCH DISPLAY DEVICE" in the State Intellectual Property Office of China, the whole disclosure of which is incorporated herein by reference.

### TECHNICAL FIELD

The present application relates to the technical field of display, and particularly, to a touch substrate, a method of manufacturing the touch substrate, a method of driving the touch substrate, and a touch display device.

### BACKGROUND

At present, a touch screen, as a special peripheral device for a computer, is the most convenient, simplest and friendliest human-computer interaction device. The touch screen enables the multi-media technique to take on a new look and becomes a more attractive newly multi-media interactive device.

In a conventional manufacturing process for a touch screen, an in-cell self-capacitive touch screen is manufactured generally based on an array substrate. Because of a large signal amount and less crosstalk, the in-cell self-capacitive touch screen has become a target of interest many manufacturers are eager to research and develop. The in-cell self-capacitive touch screen is provided therein with a plurality of self-capacitive electrodes that are provided in a same layer and are electrically insulated with each other. When a human body does not touch the screen, capacitances loaded to the respective self-capacitive electrodes are a constant capacitance. When the human body touches the screen, the capacitance loaded to the corresponding self-capacitive electrode is a sum of the constant capacitance and a capacitance of the human body, and thus a touch detection unit can determine a touch position by detecting variations in capacitance values of the respective self-capacitive electrodes during a touch duration.

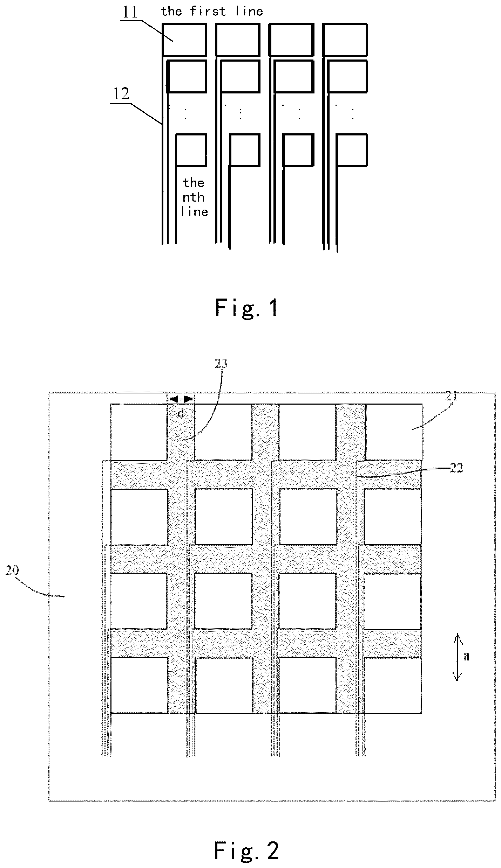

With reference to Fig. 1, in a conventional in-cell touch screen, individual self-capacitive electrodes 11 are arranged in an array, and each self-capacitive electrode 11 is connected to the touch detection unit via a touch leading wire 12 corresponding to that self-capacitive electrode 11 (not shown). Since the touch leading wires 12 and the self-capacitive electrodes 11 are provided in the same layer, a space occupied by wiring of the touch leading wires 12 gradually increases along a downward direction, causing that the sizes of the respective self-capacitive electrodes 11 are forced to be gradually reduced along the downward direction. Difference in sizes of the respective self-capacitive electrodes 11 adversely influences accuracy of touch detection.

### SUMMARY

Some of embodiments of the present application provide a touch substrate, a method of manufacturing the touch substrate, a method of driving the touch substrate, and a touch display device, in which a plurality of touch electrodes having a same size and a same shape and arranged in an array are provided, thereby improving accuracy of touch detection.

Concerning the above, according to an aspect of the present application, there is provided a touch substrate, comprising: a base substrate; a plurality of touch electrodes having a same shape and a same size and provided on the base substrate; a plurality of touch leading wires provided on the base substrate, each touch electrode being electrically connected to one of the plurality of touch leading wires; and shielding portions provided on the base substrate, the shielding portions being provided on a blank portion of a wiring region for the plurality of touch leading wires except an area of the wiring region in which the plurality of touch leading wires are arranged.

In an embodiment, each touch electrode is constituted by metal grids, and each metal wire of the metal grids is shielded by a black matrix.

In an embodiment, each touch leading wire is shielded by the black matrix.

In an embodiment, the shielding portions are constituted by metal grids, and each metal wire of the metal grids is shielded by a black matrix.

In an embodiment, grid pitches of the metal grids in a direction perpendicular to an extending direction of the touch leading wires are consistent.

In an embodiment, the plurality of touch electrodes, the shielding portions and the plurality of touch leading wires are provided in a same layer and are formed by etching a same metal layer.

Alternatively, the shielding portions are provided in a layer different from that in which the plurality of touch electrodes and the plurality of touch leading wires are provided.

In an embodiment, the touch substrate is a color filter substrate or an array substrate.

In an embodiment, in a case where the touch substrate is a color filter substrate, the metal grids are located under a layer in which the black matrix lies and are shielded by the black matrix.

In an embodiment, the shielding portions are made of opaque conductive material.

In an embodiment, the shielding portions arranged along an extending direction of the touch leading wires are electrically connected with each other.

Optionally, the plurality of touch electrodes are arranged in an array, and the plurality of touch leading wires run in gaps between any two adjacent rows or columns of touch electrodes.

In an embodiment, centers of the touch electrodes in a same column or row are in a straight line.

In an embodiment, the shielding portions are driven by signals having a same frequency and a same amplitude as driving signals of the plurality of touch electrodes have.

According to another aspect of the present application, there is provided a method of manufacturing a touch substrate, comprising: providing a base substrate; forming a plurality of touch electrodes having a same shape and a same size on the base substrate, and forming a plurality of touch leading wires and shielding portions on the base substrate, wherein each touch electrode is electrically connected to one of the plurality of touch leading wires; wherein the shielding portions are provided on a blank portion of a wiring region for the plurality of touch leading wires except an area of the wiring region in which the plurality of touch leading wires are arranged.

In an embodiment, the step of forming a plurality of touch electrodes having a same shape and a same size on the base substrate and forming a plurality of touch leading wires and shielding portions on the base substrate comprises: forming a color photoresist layer and a black matrix on the base substrate; and on the base substrate formed with the color photoresist layer and the black matrix, forming a metal film and forming the plurality of touch electrodes, the plurality of touch leading wires and the shielding portions constituted by metal grids which are formed by patterning the metal film through a patterning process, wherein each metal wire of the metal grids is shielded by the black matrix.

According to a further aspect of the present application, there is provided a method of driving the touch substrate as described above, comprising: applying to the shielding portions driving signals having a same frequency and a same amplitude as signals applied to the plurality of touch electrodes have.

According to a further aspect of the present application, there is provided a touch display device, comprising the touch substrate as described above.

With the touch substrate, the method of manufacturing the touch substrate, the method of driving the touch substrate and the touch display device according to the present application, accuracy of touch detection can be improved by using the touch electrodes having the same size and the same shape. In the touch substrate according to the present application, each touch electrode is electrically connected with one of the touch leading wires and therefore is electrically connected to a corresponding signal pin via the touch leading wire. Furthermore, in the present application, since the touch electrodes having the same size and the same shape may cause the touch leading wires to be densely distributed in a lower portion of the wiring region for the touch leading wires, the shielding portions are provided on the blank portion of the wiring region for the touch leading wires and the blank portion is a portion of the wiring region for the touch leading wires except the area of the wiring region for the touch leading wires in which the touch leading wires are arranged. In this way, on one hand, difference in transmissitivity caused due to variation in wiring density of the touch leading wires may be eliminated or at least reduced by means of shielding function of the shielding portions; and on the other hand, same driving signals as be applied to the touch electrodes are applied to the shielding portions, so that different influences on display effects caused due to difference in driving signals may be avoided and thus uniformity of pictures may be enhanced .

### BRIEF DESCRIPTION OF THE DRAWINGS

In order to explain technical solutions of embodiments of the present application more clearly, the drawings that are used to illustrate the embodiments will be described briefly below. Apparently, the drawings described below only show some of embodiments of the present application, instead of limiting the present application. One skilled in the art can obtain other drawings according to these drawings without paying any inventive efforts.
Fig. 1 is a schematic view of a layout of touch electrodes and touch leading wires of an in-cell touch screen in the prior art;
Fig. 2 is a schematic plan view of a touch substrate according to an embodiment of the present application;
Fig. 3 is a schematic view, in cross-section, of the touch substrate according to an embodiment of the present application, taking a color filter substrate as an example;
Fig. 4 is a schematic plain view of the touch substrate according to an embodiment of the present application, taking the color filter substrate as an example;
Fig. 5 is a view of design details of metal grids constituting the touch electrodes and the touch leading wires according to an embodiment of the present application; and
Fig. 6 is a flow chart showing a method of manufacturing the touch substrate according to an embodiment of the present application.

### DETAILED DESCRIPTION OF THE EMBODIMENTS

Technical solutions according to the embodiments of the present application will be explicitly and completely described hereinafter with reference to attached drawings thereof. Obviously, the described embodiments are only some, rather than all, of the embodiments of the present application. Based on the embodiments of the present application, all other embodiments obtained by those skilled in the art without paying any creative work will fall within the protective scope of the present application.

As shown in Fig. 2, the touch substrate according to some of the embodiments of the present application comprises a base substrate 20, a plurality of touch electrodes 21 having a same size and a same shape and provided on the base substrate 20, a plurality of touch leading wires 22 provided on the base substrate 20, and shielding portions 23 provided on the base substrate 20. Each touch electrode 21 is electrically connected with one touch leading wire 22, and another end of the one touch leading wire 22 is connected to a corresponding signal pin and then to a touch detection unit (not shown). The shielding portions 23 are provided on a blank portion of a wiring region for the plurality of touch leading wires 22 except a portion of the wiring region on which the plurality of touch leading wires 22 are provided.

In an embodiment, the shielding portions 23 and the plurality of touch electrodes 21 are driven by a same signal, that is, the shielding portions 23 and the plurality of touch electrodes 21 are driven by signals having a same frequency and a same amplitude. With such arrangement, a possible coupling capacitance generated when the shielding portions and the plurality of touch electrodes are provided on the same touch substrate may be eliminated.

In this embodiment, each touch electrode 21 is electrically connected with one touch leading wire 22, so as to realize self-capacitive touch. However, application of this embodiment is not limited to this. This embodiment is suitable for solving problems caused when the touch electrodes 21 and the touch leading wires 22 are arranged in the same layer and the sizes of the respective touch electrodes 21 are varied for giving way to the touch leading wires 22.

Specifically, the plurality of touch electrodes 21 having the same size and the same shape are provided in this embodiment, and then the touch leading wires 22 electrically connected with the touch electrodes 21 are arranged. In this case, since there may be no wire to be arranged on a part of the base substrate and at the same time there may be wires to be densely arranged on another part of the base substrate, transmissitivities at different parts of the base substrate are different during displaying operation of a panel including the touch substrate, resulting in an adverse influence on display effects. Accordingly, in this embodiment, the shielding portions are provided on the blank portion of the wiring region for the touch leading wires and the blank portion is a portion of the wiring region for the touch leading wires except the portion of the wiring region for the touch leading wires on which the touch leading wires are arranged. On one hand, difference in transmissitivity caused due to variation in wiring density of the touch leading wires may be eliminated or at least reduced by means of shielding function of the shielding portions; and on the other hand, same driving signals as be applied to the touch electrodes are applied to the shielding portions, so that different influences on display effects caused due to different driving signals may be avoided. As a result, the touch leading wires are invisible or not apparent in a displaying state, so that the adverse influence on display effects may be avoided and thus uniformity of pictures may be enhanced.

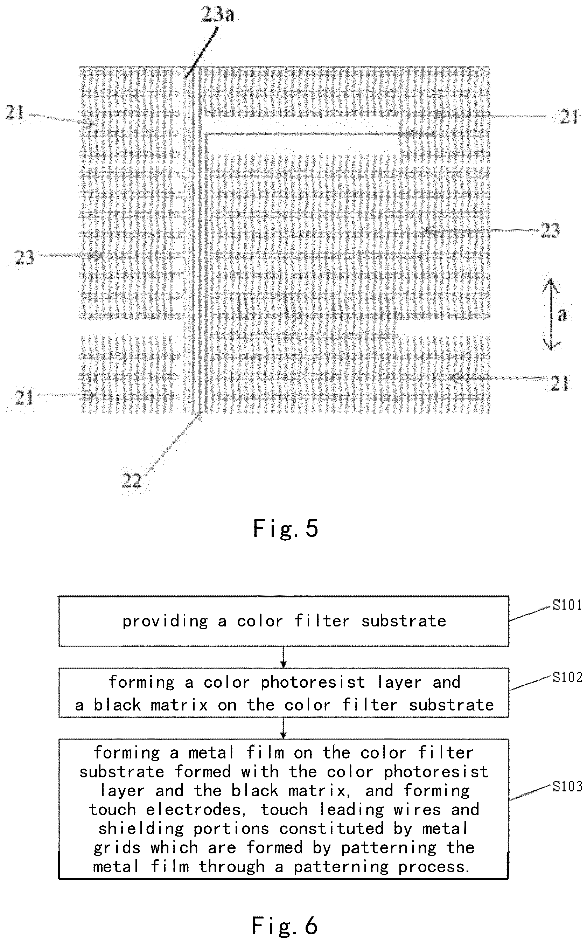

In some embodiments of the present application, the shielding portions 23 arranged along an extending direction of the touch leading wires are electrically connected with each other, so as to facilitate applying of the driving signals. For example, with reference to Fig. 5, the respective shielding portions 23 arranged along the extending direction (the direction as shown by arrow a) of the touch leading wires are electrically connect to each other by metal grid wires 23a of the shielding portions 23.

In some embodiments of the present application, the wiring region for the touch leading wires is a region in which the touch leading wires are arranged or distributed. In particular, with reference to Fig. 2, the touch leading wires run in a gap between two adjacent columns of touch electrodes and along the length of the gap. Thus, a longitudinal gap located between two adjacent columns of touch electrodes and having a width of d is the wiring region for the touch leading wires in this embodiment, and the shielding portions 23 are provided on the blank portion (i.e., a region in which no touch leading wire is provided) in the wiring region, so that non-uniformity of display caused due to longitudinally-wiring density unevenness of the touch leading wires may be eliminated or at least reduced. It should be noted that in the embodiment shown in Fig. 2 a gap between two adjacent rows of touch electrodes may be designed as narrow as possible, and thus only wiring unevenness in the longitudinal gap (the wiring region for the touch electrodes) between the touch electrodes is needed to be eliminated or at least reduced by providing the shielding portions.

In an embodiment, the shielding portions 23 may be provided in a same layer as the touch electrodes 21 and the touch leading wires 22 are provided. Alternatively, the shielding portions 23 may be provided in an individual layer. Generally, opaque material is selected for forming the shielding portions 23 so as to provide a shielding function. In a case where the shielding portions 23 are made of opaque conductive material, the shielding portions 23 are applied with the same driving signals (having the same frequency and the same amplitude) as be applied to the touch electrodes 21 so as to be driven. In this way, the adverse influence on display effects caused by the difference of the driving signals may be avoided and thus uniformity of pictures may be enhanced.

In an optional embodiment, the touch electrodes 21 are arranged in an array to ensure that the touch electrodes 21 have the same size, and centers of the touch electrodes 21 which are arranged in a same row or in a same column lie in a straight line. The touch leading wires 22 run in the gap between two adjacent columns of touch electrodes. The shielding portions 23 may be designed according to practical requirements to provide a shielding function, so that the touch leading wires 22 may be invisible or not apparent in the display state, thereby avoiding differences in the display effects.

In an embodiment, the touch electrodes 21 and the touch leading wires 22 are made of metal grids (or the touch electrodes 21 or the touch leading wires 22 are made of metal grids), and metal wires of the metal grids are shielded by a black matrix, so that higher touch performance may be achieved while not adversely influencing transmissitivity. In an embodiment, the shielding portions 23 may be made of metal grids, that is, the shielding portions 23 may be made of those metal grids that are distributed on the blank portion of the wiring region for the touch leading wires except a location or an area in which the plurality of touch leading wires are provided or distributed. In this way, the metal wires are evenly distributed on the whole panel, so that better display effect may be achieved. Furthermore, since the metal wires of the metal grids are shielded by the black matrix, the presence of the metal grids may not or may not greatly adversely influence transmissitivity. The term "metal grid" means a grid or a structure having a grid shape made of metal material. In an embodiment, grid pitches of the metal grids in a direction perpendicular to the extending direction of the touch leading wires (see the direction as shown by the arrow a in Fig. 2 or 5) are consistent.

In the prior art, the touch electrodes are made of continuous film-shaped material that covers the region in which the touch electrodes are distributed, and the touch leading wires are made of continuous film-shaped material that covers the region designed for the touch leading wires. On the contrary, in the present application, the touch electrodes are made of those metal grids that cover the region in which the touch electrodes are distributed, the touch leading wires are made of those metal grids that cover the region designed for the touch leading wires, and the shielding portions are made of those metal grids that cover the blank portion of the wiring region for the touch leading wires.

It should be noted that the above-described arrangement or configuration (the configurations of the touch electrodes 21, the touch leading wires 22 and the shielding portions 23) is suitable not only for a color filter substrate, but also for an array substrate. In a case of being applied to the color filter substrate or the array substrate, the above configurations may share a same substrate with the color filter substrate or the array substrate.

Next, in order that one skilled in the art can understand and realize the structure of the touch substrate according to the embodiments of the present application, the touch substrate suitable for a color filter substrate will be described in details by taking as an example.

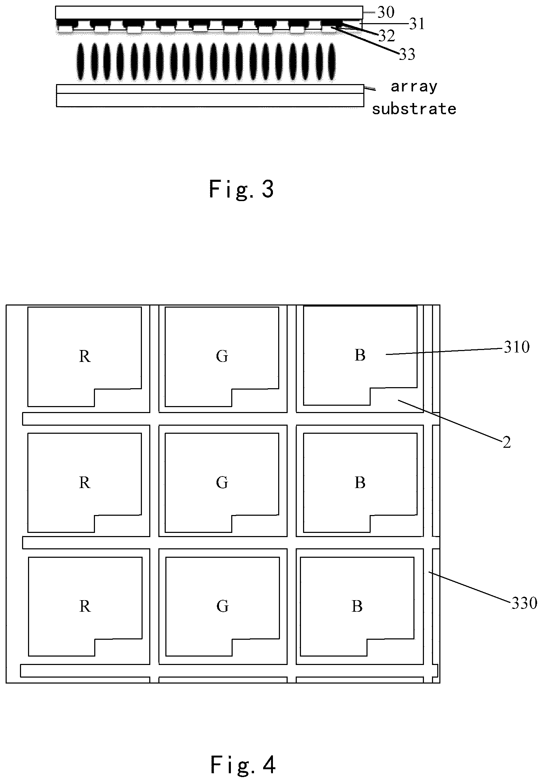

As shown in Figs. 3 and 4, a base substrate 30 of a color filter substrate having a touch function is provided thereon with a color photoresist layer (color film) 31 and a black matrix 32. A layer of metal grids 33 is provided under the black matrix 32. Metal wires 330 of the metal grids 33 each is shielded by the black matrix 32, that is, corresponds to a shielding region of the black matrix 32. In this way, the provision of the metal grids 33 will not adversely influence on transmissitivity.

As particularly shown in Fig. 4, a plurality of pixels are arranged on the base substrate 30, and each pixel includes three sub-pixels. Each sub-pixel corresponds to one color photoresist block 310 (i.e., red/green/blue photoresist block) and is an opening region of the pixel. At a corner of the sub-pixel, the color photoresist block 310 makes room for a thin film transistor. As shown in Fig. 4, a region at the lower and right corner of the sub-pixel is a region 2 for the thin film transistor. The metal wires 330 of the metal grids 33 are distributed in longitudinal gaps and lateral gaps between the respective sub-pixels, and each metal wire 330 corresponds to the shielding region of the black matrix 32, that is, is shielded by the black matrix 32.

It should be noted that although the touch electrodes 21 have the same size and the same shape, arrangement and specific shape of the touch electrodes 21 are not limited. Specific shapes and distribution regions of the touch leading wires 22 and the shielding portions 23 are not limited, as long as the touch leading wires 22 can electrically connect the touch electrodes 22 with the touch detection unit and difference in transmissitivity caused due to variation in wiring density of the touch leading wires can be eliminated or at least reduced by means of the shielding function of the shielding portions.

Fig. 5 shows a schematic view of design details of the metal grids 33 constituting the touch electrodes and the touch leading wires according to an embodiment of the present application, in which all the metal grids 33 are divided into a touch region, a touch leading wire region and a shielding region. The touch region corresponds to a region in which the touch electrodes 21 are distributed, the touch leading wire region corresponds to a region occupied by the touch leading wires 22, and the shielding region corresponds to a region in which the shielding portions 23 are distributed. In Fig. 5, the touch electrode 21 constituted by the metal grids has a rectangular profile, and the touch electrodes 21 are arranged in an array. The centers of the touch electrodes 21 which are arranged in the same row or in the same column lie in a straight line, and the metal wires constituting the touch electrodes 21 are ensured to be electrically connected with each other. The longitudinal gaps among the touch electrodes 21 form the wiring region for the touch leading wires 22 in which the touch leading wires 22 are arranged. Except for the region in which the touch electrodes 21 are distributed and the wiring region of the touch leading wires 22, the remaining blank portion of the wiring region is the shielding region and also is covered by the metal grids which constitute the shielding portions 23.

It should be noted that except that the respective touch leading wires 22 and the corresponding touch electrodes 21 are electrically connected with each other, the metal grids constituting the touch electrodes 21, the touch leading wires 22 and the shielding portions 23 are broken at respective adjacent boundaroes among the touch electrodes, the touch leading wires and the shielding portions, that is, the touch electrodes 21, the touch leading wires 22 and the shielding portions 23 are formed by three separated sheets of metal grids, respectively. However, the three separated sheets of metal grids may be provided in a same layer and may be formed by etching a same metal layer.

When specifically designing the metal grids constituting the touch electrodes, the shielding portions and/or the touch leading wires, available or acceptable shape and size of the lowest touch electrode in each column are first calculated in consideration of wiring of the touch leading wires (by taking a touch electrode having a square shape as an example, the size is a side length). Then, all the touch electrodes are provided to have the calculated size and shape. The longitudinal gaps of the touch electrodes 21 (i.e., the gaps between two adjacent columns of touch electrodes) are used for wiring of the touch leading wires 22 and form the wiring region. On the condition that the wiring region at each column provides a room occupied for wiring of the touch leading wires and a room occupied by the metal grids of the shielding portions 23, the wiring region is also needed to provide a room used for connecting the respective metal grids constituting the shielding portions 23 together. In the above design, except for the region covered by the touch electrodes 21 and the touch leading wires 22, the remaining region is filled with the metal grids that form the shielding portions 23. In an embodiment, the touch electrodes 21 have the same size and the centers of them are in a straight line in the longitudinal direction and in the lateral direction.

The above touch electrodes 21 are led out of the color filter substrate via the touch leading wires 22 and then are led to an array substrate via gold balls, and then are connected to corresponding pins of a chip. A touch driving signal may influence the display effect. In a case where the metal grids constituting the shielding portions 23 are led out column by column, same driving signals as be applied to the touch electrodes 21 are used to drive the shielding portions 23, or signals having the same frequency and the same amplitude as the driving signals of the touch leading wires 21 have are used to drive the shielding portions 23. In this way, the adverse influence on display effects caused by the difference of the driving signals may be avoided and thus uniformity of pictures may be enhanced.

As described above, some of the embodiments of the present application provide a novel in-cell self-capacitive design applied to the color filter substrate, in which a layer of metal grids is used and the metal wires of the metal grids correspond to a pattern of the black matrix at a side of the color film. Since the metal grids are in the form of a single layer, in order to ensure that the centers of the touch electrodes are in a straight line, all the metal grids are divided into the touch region, the touch leading wire region and the shielding region. The whole configuration ensures that the touch electrodes are consistent and the shielding regions are consistent. In this way, difference in size of the touch electrodes caused due to wiring in a single layer may be effectively eliminated, thereby achieving better touch performance. Furthermore, because of the configuration of the metal grids, the actual area of the touch electrodes is reduced and thus a touch load is reduced.

Some of the embodiments of the present application also provide a touch display device including any touch substrate as described above. This device has lower cost, better touch performance and higher display quality. The touch display device may be any product or component that has a display function, such as a liquid crystal panel, an electronic paper, an OLED panel, a cell phone, a panel computer, a TV, a displayer, a notebook computer, a digital photo frame, a navigator and so on.

Some of the embodiments of the present application also provide a method of manufacturing the touch substrate, comprising: providing a base substrate; forming a plurality of touch electrodes having a same shape and a same size on the base substrate, and forming a plurality of touch leading wires and shielding portions on the base substrate, wherein each touch electrode is electrically connected to one of the plurality of touch leading wires; wherein the shielding portions are provided on a blank portion of a wiring region for the plurality of touch leading wires except an area of the wiring region in which the plurality of touch leading wires are arranged, so as to shield the touch leading wires and improve display effects.

In the method of manufacturing the touch substrate according to the present application, forming the touch electrodes having the same size and the same shape may improve accuracy of touch detection. Furthermore, since the shielding portions are provided, difference in display effect caused due to variation in wiring density of the touch leading wires may be eliminated.

Next, the method of manufacturing the touch substrate according to the embodiments of the present application will be described in details by taking a color filter substrate as an example.

As shown in Fig. 6, the method of manufacturing the color filter substrate having a touch function comprises the steps of:
S101 providing the base substrate 30;
S102 as shown in Figs. 3 and 4, forming the color photoresist layer 31 and the black matrix 32 on the base substrate 30, wherein the prior art has disclosed methods of forming the color photoresist layer 31 and the black matrix 32 and the detailed description of those methods is omitted;
S103 on the base substrate formed with the color photoresist layer 31 and the black matrix 32, forming a metal film and forming the plurality of touch electrodes 21, the plurality of touch leading wires 22 and the shielding portions 23 constituted by the metal grids 33 (as shown in Fig. 5) which are formed by patterning the metal film through a patterning process, wherein each metal wire 330 of the metal grids 33 is covered by the black matrix 32. The shielding portions 23 are distributed in a portion of the base substrate expect the portion of the base substrate in which the touch electrodes 21 and the touch leading wires 22 are arranged, mainly in the blank portion of the wiring region which excludes the portion of the wiring region occupied by the touch leading wires in the gaps between any two adjacent columns of touch electrodes. The above-mentioned patterning process is not limited to a lithographic process.

In the method of manufacturing the touch substrate according to the present application, the metal grids 33 are formed of a single layer of metal film to constitute the touch electrodes 21, the touch leading wires 22 and the shielding portions 23. Since the touch electrodes 21 have the same size and the same shape, accuracy of touch detection can be improved. Furthermore, by means of shielding function provided by the black matrix and the shielding portions 23 constituted by the metal grids, the touch leading wires 22 can be shielded, so that the touch leading wires 22 are invisible or not apparent in a displaying state, and difference in display effect caused due to variation in wiring density of the touch leading wires may be eliminated or at least reduced. Furthermore, since the metal grids are used and hence the area of the touch electrodes is reduced correspondingly, a touch load may be reduced. The metal wires of the metal grids are evenly distributed on the whole panel, uniformity of display may be improved.

In an embodiment, the metal grids constituting the shielding portions 23 are connected with each other along a certain direction (in an optional embodiment, in an extending direction of the touch leading wires 22), so that the shielding portions 23 can be led out of the panel and be driven by the same signals as being applied to the touch electrodes 21. In this way, adverse influence on display effects caused due to difference in driving signals may be avoided, thereby achieving better uniformity of pictures.

Concerning the above, with the method of manufacturing the touch substrate according to the embodiments of the present application, the touch electrodes having the same size and the same shape can be formed by a single patterning process. In this way, manufacturing cost may be reduced, accuracy of touch detection may be improved, and display effects may be improved.

Some of the embodiments of the present application also provide a method of driving the touch substrate as described above, comprising the step of applying to the shielding portions same driving signals as being applied to the plurality of touch electrodes, that is, the driving signals applied to the shielding portion have same frequencies and same amplitudes as the driving signals applied to the plurality of touch electrodes have. With such arrangement, a coupling capacitance generated when the shielding portions and the plurality of touch electrodes are provided on the same touch substrate may be eliminated.

The above embodiments are only examples of the present application. Based on the present disclosure, those skilled in the art can easily envisage obvious modifications or variations which will also fall within the scope of the present application.

The respective embodiments of the present application are progressively described. Same or similar parts/structures among the embodiments may be referred with each other. Different points/content of an embodiment from other embodiments are described in details. In particular, since product embodiments correspond to method embodiments, they are described briefly. Details of those product embodiments may refer to the relevant description of the method embodiments.

The above embodiments are only examples of the present application, but the protection scope of the present application is not limited to this. It would be appreciated by those skilled in the art that various modifications or alternations of the above embodiments within the scope of the present disclosure will also fall within the scope of the present application. The scope of the present application is defined by the appended claims.

## Claims

1. A touch substrate, comprising:
a base substrate;
a plurality of touch electrodes having a same shape and a same size and provided on the base substrate;
a plurality of touch leading wires provided on the base substrate, each touch electrode being electrically connected to one of the plurality of touch leading wires; and
shielding portions provided on the base substrate, the shielding portions being provided on a blank portion of a wiring region for the plurality of touch leading wires except an area of the wiring region in which the plurality of touch leading wires are arranged.

2. The touch substrate of claim 1, wherein,
each touch electrode is constituted by metal grids, and each metal wire of the metal grids is shielded by a black matrix.

3. The touch substrate of claim 1, wherein,
each touch leading wire is shielded by the black matrix.

4. The touch substrate of claim 1, wherein,
the shielding portions are constituted by metal grids, and each metal wire of the metal grids is shielded by a black matrix.

5. The touch substrate of claim 2 or claim 4, wherein,
grid pitches of the metal grids in a direction perpendicular to an extending direction of the touch leading wires are consistent.

6. The touch substrate of any one of claims 1-4, wherein,
the plurality of touch electrodes, the shielding portions and the plurality of touch leading wires are provided in a same layer and are formed by etching a same metal layer.

7. The touch substrate of any one of claims 1-4, wherein,
the shielding portions are provided in a layer different from that in which the plurality of touch electrodes and the plurality of touch leading wires are provided.

8. The touch substrate of any one of claims 1-4, wherein,
the touch substrate is a color filter substrate or an array substrate.

9. The touch substrate of claim 8, wherein,
in a case where the touch substrate is a color filter substrate, the metal grids are located under a layer in which the black matrix lies and are shielded by the black matrix.

10. The touch substrate of any one of claims 1-4, wherein,
the shielding portions are made of opaque conductive material.

11. The touch substrate of claim 10, wherein,
the shielding portions arranged along an extending direction of the touch leading wires are electrically connected with each other.

12. The touch substrate of any one of claims 1-4, wherein,
the plurality of touch electrodes are arranged in an array, and the plurality of touch leading wires run in gaps between any two adjacent rows or columns of touch electrodes.

13. The touch substrate of claim 12, wherein,
centers of the touch electrodes in a same column or row are in a straight line.

14. The touch substrate of claim 1, wherein,
the shielding portions are driven by signals having a same frequency and a same amplitude as driving signals of the plurality of touch electrodes have.

15. A method of manufacturing a touch substrate, comprising:
providing a base substrate;
forming a plurality of touch electrodes having a same shape and a same size on the base substrate, and forming a plurality of touch leading wires and shielding portions on the base substrate, wherein each touch electrode is electrically connected to one of the plurality of touch leading wires;
wherein the shielding portions are provided on a blank portion of a wiring region for the plurality of touch leading wires except an area of the wiring region in which the plurality of touch leading wires are arranged.

16. The method of claim 15, wherein,
the step of forming a plurality of touch electrodes having a same shape and a same size on the base substrate and forming a plurality of touch leading wires and shielding portions on the base substrate comprises:
forming a color photoresist layer and a black matrix on the base substrate;
on the base substrate formed with the color photoresist layer and the black matrix, forming a metal film and forming the plurality of touch electrodes, the plurality of touch leading wires and the shielding portions constituted by metal grids which are formed by patterning the metal film through a patterning process, wherein each metal wire of the metal grids is shielded by the black matrix.

17. A method of driving the touch substrate according to any one of claims 1-13, comprising:
applying to the shielding portions driving signals having a same frequency and a same amplitude as signals applied to the plurality of touch electrodes have.

18. A touch display device, comprising the touch substrate according to any one of claims 1-14.
